# EUROPÄISCHE PATENTSCHRIFT

(11) **EP 0 995 132 B1**
(45) Veröffentlichungstag und Bekanntmachung des Hinweises auf die Patenterteilung: **02.05.2003**
(21) Anmeldenummer: 98937550.6
(22) Anmeldetag: 26.06.1998
(51) Int. Cl.: G01T 1/36, G01T 1/29, G01T 1/17, G01T 1/00

(54) **Verfahren und Vorrichtung zur Ermittlung von Photonenspektren**
Method and apparatus for detecting photon spectra
Procédé et appareil pour la détermination de spectres photoniques

(30) Priorität: 15.07.1997 DE 19730242
(43) Veröffentlichungstag der Anmeldung: 26.04.2000
(73) Patentinhaber: GSF-Forschungszentrum für Umwelt und Gesundheit GmbH, 85764 Neuherberg (DE)
(72) Erfinder: FEHRENBACHER, Georg, D-80809 München (DE); SCHÜTZ, Rainer, D-80798 München (DE); CORDES, Eric, D-80687 München (DE); WAHL, Wolfgang, D-83727 Schliersee (DE)
(86) Internationale Anmeldenummer: EP9803914
(87) Internationale Veröffentlichungsnummer: WO99004291

(56) Entgegenhaltungen:
- WO-A-93/03348
- WO-A-94/03825
- US-A- 5 572 028
- PATENT ABSTRACTS OF JAPAN vol. 012, no. 339 (P-757), 12. September 1988 & JP 63 098583 A (KASEI OPTONIX CO LTD), 30. April 1988
- PATENT ABSTRACTS OF JAPAN vol. 017, no. 684 (P-1661), 15. Dezember 1993 & JP 05 232234 A (ALOKA CO LTD), 7. September 1993
- BOONE J M: "X-RAY SPECTRAL RECONSTRUCTION FROM ATTENUATION DATA USING NEURAL NETWORKS" MEDICAL PHYSICS, Bd. 17, Nr. 4, 1. Juli 1990, Seiten 647-654, XP000149669

## Beschreibung

Die Erfindung betrifft ein Verfahren zur Ermittlung von Photonenspektren nach dem Oberbegriff des Patentanspruchs 1.

Die beruflich bedingte Strahlenexposition in Photonenfeldern wird zur Zeit durch die Verwendung von Film- oder Festkörperdosimetern erfaßt. Die dadurch ermittelte Personendosis ist ein Maß für die effektive Dosis, die als gewichtete Summe von Organ-Energiedosen definiert ist und stark von der Energie und vom Einstrahlwinkel der Photonenstrahlung relativ zur exponierten Person abhängt. Da die Dosis nur integral gemessen wird, ist es mit diesen Personendosimetern im allgemeinen nicht möglich, ein Photonenspektrum zu bestimmen. Selbst auf die Energie der dosisverursachenden Photonen kann nur eingeschränkt geschlossen werden. Dadurch können die Organdosen nicht direkt angegeben werden und müssen im Falle einer Strahlenexposition einer Person indirekt berechnet werden, was zu größeren Unsicherheiten führt. Für energiereiche Photonen über ca. 7 MeV, wie sie u. a. bei der medizinischen Strahlentherapie auftreten, kann keine Dosis angegeben werden. Außerdem ist es wünschenswert zwischen Streustrahlung und direkter Strahlung einer Quelle unterscheiden zu können, um in der Lage zu sein, Abschirmungsmaßnahmen auch mit Hilfe eines Personendosimeters zu beurteilen.

Um Photonenstrahlung zu detektieren, werden zur Zeit neben passiven Systemen, wie dem Filmdosimeter, entweder Mehrkomponentensysteme oder selbstkompensierende Einzelsysteme mit günstiger Energieabhängigkeit verwendet. Sie beschreiben die Dosis targetbezogen, d.h. es wird auf die Ermittlung der feldbeschreibenden Parameter (Energie, Einstrahlwinkel) verzichtet und nur die gewichtete Ermittlung der Energiedosis in den Organen angestrebt. Beispiele hierfür sind das von Siemens-Plessey entwickelte Personendosimeter (EPD1, siehe z. B. Electronic dosimetry 1/93 Issue 1, Siemens-Plessey Controls Ltd., 1993) für die Anzeige der neuen Meßgröße Hₚ(10) für Photonenstrahlung und zum Nachweis und zur Dosimetrie von Photonen- und Elektronenstrahlung geringer Reichweite (Hautdosis) oder die wie das Siemens-Dosimeter auf Si-Dioden basierenden Dosimeter der Firma Rados (RAD-50, RAD-52 Digitale Taschendosimeter, Datenblätter der Firma RADOS Technology Oy, Finnland).

Die genannten Systeme sind als Ereigniszähler konstruiert, ohne eine Strahlenfeldanalyse mit der Möglichkeit einer Spektrumsbestimmung vorzunehmen. Bei ihrer Konstruktion muß die Energieabhängigkeit der zu ermittelnden Personendosis und der Photonenwechselwirkung mit den verwendeten Detektoren berücksichtigt werden. Die Materialien für die Detektorteile sowie die Auswertealgorithmen bestimmen die Eigenschaften der Dosisermittlung (Energieabhängigkeit, Genauigkeit in verschiedenen Dosisbereichen, Winkelabhängigkeiten). Es wäre wünschenswert, das Spektrum zu kennen, um die Unsicherheit in der Angabe von Organ- und Teilkörperdosen zu reduzieren. Durch die Kenntnis der Photonenspektren und des Zeitpunktes einer Strahlenexposition ist eine verbesserte Analyse dieser Exposition möglich. Auch sollte die bisher nur grobe Unterscheidung zwischen Streustrahlung und direkt auftreffender Strahlung verbessert werden, was bei Kenntnis des Photonenspektrums erreicht werden kann. Für energiereiche Photonen über ca. 7 MeV, wie sie bei der medizinischen Strahlentherapie auftreten, sind die vorhandenen Techniken nicht mehr sensitiv genug, weil die Ereignisse nur integral ausgewertet werden. Eine Anpassung der Systeme bei Einführung neuer Meßgrößen nur durch Softwaremaßnahmen würde viel an Aufwand ersparen, da bei den jetzigen Detektionssystemen dabei Änderungen an der Hardware gemacht werden müssen.

Aufgabe der Erfindung ist es ein neues Verfahren zur Verfügung zu stellen, mit dem die Bestimmung Strahlungsdosen im gesamten interessierenden Energiebereich in Echtzeit durchgeführt werden kann.

Gelöst wird diese Aufgabe durch die Merkmale des Patentanspruchs 1. die Unteransprüche beschreiben vorteilhafte Ausgestaltungen der Erfindung.

Das Verfahren basiert darauf, daß in erster Linie das Energiespektrum des Photonenfeldes ermittelt wird. Daraus kann auf die Art der Strahlenquelle geschlossen und die verschiedenen Dosisarten leicht berechnet werden. Das hier vorzustellende System stellt eine Kombination aus Mehrkomponentendetektor und Pulshöhenanalyse dar. Für ein Dosimetriesystem mit einem Anwendungsbereich von 20 keV bis ca. 100 MeV wird ein Zwei- oder Mehr-Detektorsystem benötigt. In beiden Detektoren werden Pulshöhenverteilungen (Verteilung von Energiedeponierungen im aktiven Teil) aufgenommen, in denen Energieintervalle als Detektionsuntereinheiten (=Element) definiert werden. In diesen wird die Anzahl an Zählereignissen betrachtet. Ein Detektor wird für die Photonen mit Energien bis 300 keV benötigt, der andere besteht neben der Halbleiterdiode auch aus einem Metallfilter (1b), z.B. einem Bleifilter, und ist geeignet, um Photonen mit Energien über 200 keV zu detektieren. Die energieabhängige Nachweiswahrscheinlichkeit für Photonen in den Detektionsuntereinheiten ist durch die Schichtdicke des Metallfilters festgelegt. Die Dosiskonversionsfunktion (die zu ermittelnde Dosis als Funktion der Photonenenergie) zeigt im Energiebereich zwischen 20 keV und 150 keV einen steilen Anstieg, so daß das Photonenspektrum in diesem Energiebereich mit ausreichender Auflösung bekannt sein muß. Für den Detektor ohne Filter sollten minimal vier bis optimal zehn Untereinheiten im Bereich bis ca. 200 keV gewählt werden. Die Antworten dieser Intervalle ergeben sich dann als Funktion der Photonenenergie entsprechend der Energieabhängigkeiten der physikalischen Vorgänge im Detektor wie Photoeffekt, Comptoneffekt oder Paarbildung. Über einen Auswertealgorithmus wird in einem ersten Schritt das Photonenspektrum in einer geeigneten Energieauflösung (sinnvollerweise 10 bis 25 keV Intervalle) angegeben.

Die Neuartigkeit der Erfindung besteht in der Ermittlung der spektralen Verteilung der Photonenstrahlung im gesamten interessierenden Energiebereich (u. U. in großen Energieintervallen). Alle Dosismeßgrößen, insbesondere auch die Organ- und Teilkörperdosen, können aus der spektralen Verteilung (unter Mitberücksichtigung der Einstrahlwinkel bezüglich der exponierten Person) abgeleitet werden.

In Stichpunkten können die Eigenschaften und Vorteile der Erfindung folgendermaßen zusammengefaßt werden:

Ermittlung der spektralen Information für einen Energiebereich der Photonen von 10 keV bis 100 MeV.

Daraus Berechnung der Dosis (z.B. Hₚ(10)) für diesen Energiebereich.

Aufgrund des bekannten Spektrums wird die Recherche nach der verursachenden Quelle im Fall von Expositionen erleichtert. Unterscheidung zwischen direkter und Streustrahlung möglich. Damit kann eine Beurteilung von Abschirmungsmaßnahmen stattfinden.

Im Fall von lange nach Expositionen auftretenden Krankheitsfällen ist eine retrospektive Ursachenforschung möglich.

Verwendung eines Zwei- oder Mehr-Element-Systems zur Datenaufnahme. Ein Element ist dadurch definiert, daß sein Ausgangssignal je nach spektraler Zusammensetzung des Photonenfeldes variiert. Die Elemente bestehen aus Detektionsuntereinheiten, die u. a. mit Hilfe von Metallfiltern für eine bestimmte Photonenstrahlung sensitiv werden.
Zur Analyse der Eingangsdaten wird ein künstliches neuronales Netz eingesetzt.

Das System erlaubt eine zeitaufgelöste Meßwerterfassung.

Die Meßwerte können auch während der Messung angezeigt werden. Bei einer eventuellen Einführung von neuen Meßgrößen ist eine Anpassung durch die Änderung der Auswertesoftware einfach möglich.

Erstmalig ist mit einem kleinen, als Personendosimeter geeignetem System die Messung von Photonen im Energiebereich von 1 MeV - 100 MeV möglich, wobei Informationen über das Photonenspektrum bestimmt werden können.

Die Erfindung wird im folgenden anhand eines Ausführungsbeispiels mit Hilfe der Figuren näher erläutert.

Die Fig. 1 zeigt ein Funktionsschema des Verfahrens.

In Fig. 2 ist beispielhaft ein schematischer Aufbau eines Photonendetektors dargestellt.

Die Fig. 3 zeigt drei Beispiele für Dosiskonversionsfunktionen.

In Fig. 4 sind die Nachweiswahrscheinlichkeiten einiger Elemente von dem Sensor ohne Filter dargestellt.

Die Fig. 5 zeigt Pulshöhenverteilungen des Sensors mit Bleifilter, die sich bei verschiedenen Photonenenergien ergeben.

In Fig. 6 sind die Antwortfunktionen der 3 Elemente des Sensors mit Bleifilter dargestellt.

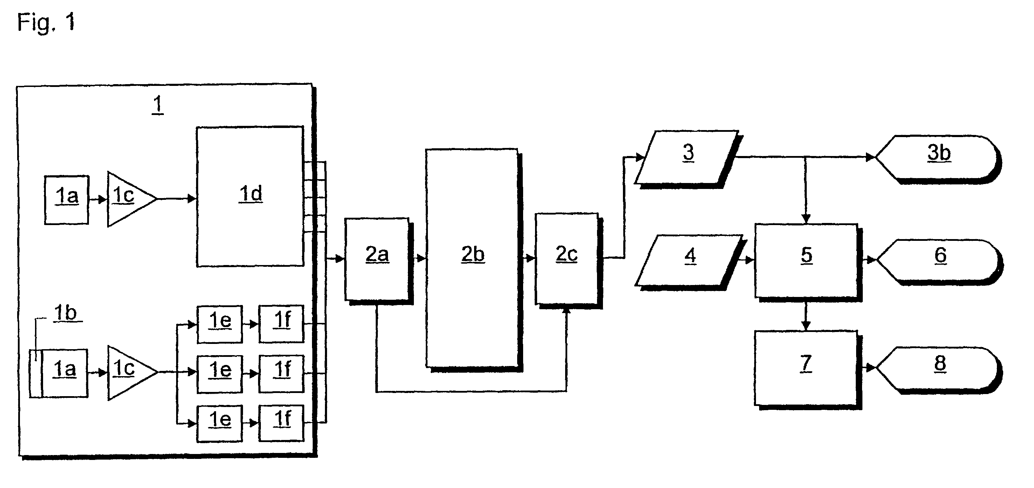

Im Funktionsschema der Fig. 1 sind die wesentlichen Funktionsgruppen und Verarbeitungsschritte des Ausführungsbeispiels für ein Dosimetriesystem entsprechend der Erfindungsmeldung dargestellt. Die einzelnen Komponenten sind durchnumeriert und werden im folgenden genauer beschrieben.

Zur Signalaufnahme dient eine Anordnung mehrerer Elemente, deren Ausgangssignale jeweils abhängig von der spektralen Verteilung des Photonenfeldes variieren. Mögliche konkrete Ausführungen sind zum Beispiel:

Für den Energiebereich von 20 keV bis maximal ca. 300 keV:

In diesem Fall ist ein Halbleiter-Sensor (in diesem Beispiel eine Si-Diode mit einer aktiven Schicht von 1mm Dicke) ausreichend. Die Ausgangspulse der Dioden werden entsprechend ihren Pulshöhen verschiedenen vordefinierten Energieintervallen zugeordnet und jeweils separat gezählt. Als Ergebnis liegen die Zählraten der verschiedenen Elemente vor.

### Für den Energiebereich von 200 keV bis 100 MeV:

In diesem Energiebereich werden mit Metallfiltern bedeckte HL-Sensoren verwendet. Die Verwendung von nur einem Halbleiter-Sensor ermöglicht eine für die Dosimetrie ausreichende Energieauflösung, die sich jedoch durch Hinzunahme weiterer HL-Sensoren mit anderen Filtern (andere Dicke, andere Kernladungszahl des verwendeten Metalls, vergl. Abschnitt "Diskussion zur Auswahl geeigneter Metallfilter") weiter verbessern läßt.

Für jeden solchen Halbleiter-Sensor werden für die Energiedeponierung Intervalle (in diesem Beispiel 3 Energieintervalle; 1: 90-200 keV, 2: 200-500 keV, 3: 500-10000 keV) definiert, für die die jeweilige Zählrate separat ermittelt wird (vergl. Abschnitt "Diskussion zur Positionierung der Energiefenster").

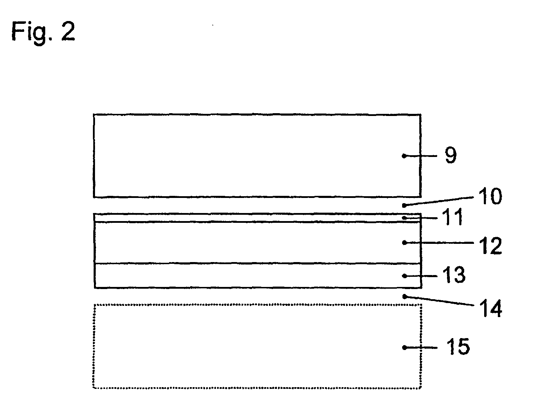

Eine Skizze zum Aufbau eines solchen Sensors für hochenergetische Photonen ist in Fig.2 dargestellt. Wegen des hohen Durchdringungsvermögens von hochenergetischer Photonenstrahlung kann es sinnvoll sein, außer dem Filter vor der Diode auch einen Filter hinter der Diode anzubringen.

### Für den Energiebereich von 20 keV bis 100 MeV:

Durch Kombination eines Sensors wie unter (i) beschrieben mit einem oder mehreren Sensoren entsprechend (ii) kann der Energiebereich von 20 keV bis 100 MeV abgedeckt werden.

An den Metallfilter ist die Anforderung zu stellen, daß auch bei hohen Photonenenergien noch eine ausreichend effiziente Wechselwirkung gewährleistet sein muß. Dies wird in erster Linie dadurch erreicht, daß Materialien mit hoher Kernladungszahl verwendet werden, da der Wirkungsquerschnitt der in diesem Energiebereich dominierenden Wechselwirkung über Paarbildung mit dem Quadrat der Kernladungszahl zunimmt. Ferner ist der Wirkungsquerschnitt proportional zur Dichte des Filtermaterials, so daß Metalle mit hoher Dichte vorteilhaft sind. Letztlich ist für die Detektion von Photonen oberhalb von 10 MeV eine ausreichende Dicke des Metallfilters (≥ 1 mm) sinnvoll, um die zunehmenden Reichweiten der hochenergetischen Elektronen für eine Erhöhung der Nachweiswahrscheinlichkeit zu nutzen. Dabei wird ausgenutzt, daß der Filter in diesem Energiebereich als Konverter für die Umwandlung von Photonen in geladene Teilchen wirkt. Dabei muß jedoch beachtet werden, daß die Nachweisbarkeit niederenergetischer Photonen (< 1 MeV) mit zunehmender Dicke des Filters herabgesetzt wird. Diesen Kriterien folgend sind Filter z. B. aus den Materialien Blei (Pb), Wismut (Bi), Wolfram (W), Iridium (Ir) etc. mit Schichtdicken im Bereich von 1 mm-10 mm besonders geeignet.

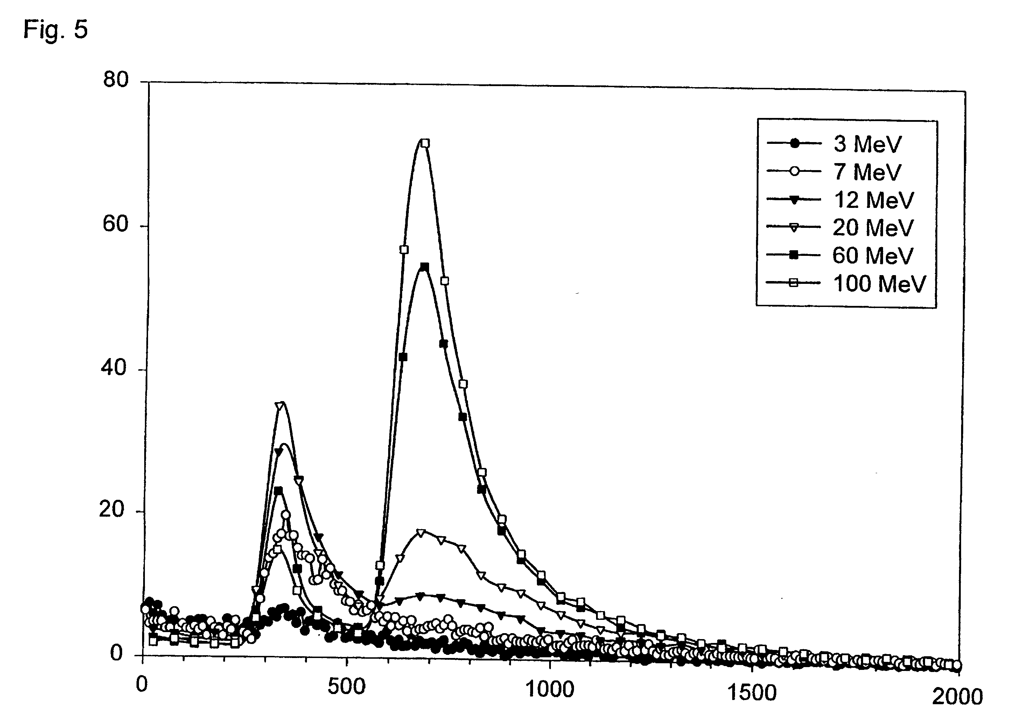

Der Metallfilter vor dem Halbleiter-Sensor agiert als Konverter für Photonenstrahlung, d.h. über die physikalischen Effekte Photoeffekt, Comptoneffekt und Paarbildung wird Elektronenund/oder Positronenstrahlung erzeugt. Hochenergetische Elektronen und/oder Positronen deponieren nur einen Teil ihrer Energie in der aktiven Schicht des HL-Sensors. Diese Teilenergiedeponierung hängt nur geringfügig von der Photonenenergie ab, da das Abbremsvermögen für Elektronen im Halbleiter in diesem Energiebereich nur relativ geringfügig variiert. Daraus resultiert ein Peak im Pulshöhenspektrum, dessen Position primär von der Dicke der aktiven Schicht des HL-Sensors abhängt (dE/dx · Dicke der aktiven Schicht ≈ Position des Peaks). Hochenergetische Elektronenstrahlung, erzeugt durch Photoeffekt, Comptoneffekt oder Paarbildung mit Detektion nur eines der erzeugten Teilchen führt zu Peak 1, hochenergetische Elektronen- und Positronenstrahlung, erzeugt durch Paarbildung, führt bei koinzidenter Energiedeponierung beider erzeugter Teilchen zu Peak 2 (Fig. 5).

Die Höhe der beiden Peaks ist abhängig von der Energie der einfallenden Photonen. Peak 1 bildet sich ab ca. 1 MeV aus, erreicht bei ca.20 MeV eine maximale Höhe und fällt dann wieder ab. Peak 2 wird ca. ab 10 MeV sichtbar und nimmt dann bis zu 100 MeV stetig zu.

Erfaßt man nun die Peaks mit Pulshöhen in den Energiebereichen 90-200 keV, im Bereich von Peak 1 (200-500 keV) und im Bereich von Peak 3 (500-10000 keV) separat, so liefert das Verhältnis der Zählraten Informationen über die Energie der Photonen.
Für dieses Beispiel wurde ein System, dessen Daten in Tabelle 1 angegeben sind, zusammengestellt. Dieses Multielementsystem liefert 12 Zahlenwerte, die von dem nachgeschalteten künstlichen neuronalen Netz weiterverarbeitet werden.

**Tab. 1**

| | Sensor 1 | Sensor 2 |
|---|---|---|
| Eignung für Photonenenergien im Bereich | 20-300 keV | 200 keV -100 MeV |
| aktives Element | Si-Diode | Si-Diode |
| Dicke der aktiven Schicht | 1 mm | 1 mm |
| Konvertermaterial | - | Pb |
| Konverterdicke | - | 1 mm |
| Energieintervalle | 9 | 3 |
| Lage der Energieintervalle* | ab 10 keV in 10 keV Schritten | 90-200 keV |
| | | 200-500 keV |
| | | 500-10000 keV |

| | | |
|---|---|---|
| *Die Angabe der Energieintervalle bezieht sich auf die Energiedeponierung der Primär- und Sekundärteilchen. | | |

In dem Funktionsschema der Fig. 1 wurde als Anwendungsbeispiel für ein Multielementsystem ein Aufbau mit 2 Dioden (1a) gewählt, von denen eine mit einem Metallfilter (1b) bedeckt ist.

Das Signal beider Dioden wird jeweils mit einem ladungsempfindlichen Verstärker verstärkt (1c).

Die Diode ohne Filter (oberer Zweig des Multielementsystems (1) in Fig. 1) dient dem Nachweis niederenergetischer Photonen (<300 keV). Da hierfür typischerweise ca. 5 bis 20 Energiebereiche erfaßt werden müssen, ist die Verwendung eines Multichannelanalysers (1d) sinnvoll, der an seinem Ausgang die Zählraten für die festgelegten Energiebereich liefert.

Die Diode mit Metallfilter (unterer Zweig des Multielementsystems (1) in Fig. 1 dient dem Nachweis höherenergetischer Photonen (>200 keV). Es ist ausreichend, die Zählraten von wenigen (im Anwendungsbeispiel 3) Energiebereichen separat zu ermitteln. Deshalb kann hier - statt des Multichannelanalysers - pro Energiebereich je eine Kombination aus einem Fensterdiskriminator (1e) und einem Zähler (1f) (in der Literatur oft als Singlechannelanalyser bezeichnet) benutzt werden. Jeder dieser 3 Singlechannelanalyser wertet dasselbe Eingangssignal aus und liefert als Ausgangswert die Zahl der Pulse in dem vorgegebenen Energieintervall.

Die Berechnung einer spektralen Information aus den 12 gemessenen Signalen erfolgt mittels eines künstlichen neuronalen Netzes. Dabei muß unter Berücksichtigung der Dosiskonversionsfaktor-Funktion eine für die Dosisbestimmung ausreichende Anzahl von Energieintervallen (Energiegruppen) festgelegt werden. Sinnvoll erscheint z.B. die folgende Einteilung in 11 Ausgangs-Energieintervalle: 20-40 keV, 40-60 keV, 60-80 keV, 80-100 keV, 100-120 keV, 120-150 keV, 150-200 keV, 200-1000 keV, 1-10 MeV, 10-50 MeV, 50-100 MeV). Es sind folgende drei Rechenschritte notwendig:

2a Die Skalierung der gemessenen Zählraten, um von den Signalen einen nur von der Dosis abhängigen Faktor zu separieren. Bei der Skalierung werden alle Zählraten durch die vom Betrag größte Zählrate geteilt, d.h. alle Zählraten liegen nach der Skalierung in einem Wertebereich zwischen Null und Eins. Der separierte Faktor wird für die Rückskalierung (Fig.1, 2c) gespeichert.

2b Die Analyse des Signals erfolgt mit einem geeigneten künstlichen neuronalen Netz. Für das neuronale Netzwerk bietet sich ein sogenanntes Feed-Forward-Netz mit zwei verdeckten Schichten an. Alle Neuronen des Netzes besitzen eine nicht lineare Übertragungsfunktion (hyperbolischer Tangens). Der Ausgabebereich dieser Neuronen liegt zwischen -1.0 und +1.0. Alle Schichten sind mit der jeweils vorherigen und nächsten vollständig vernetzt. Es gibt keine Verbindungen über die Schichten hinweg. Für die Eingabeschicht werden genauso viele Eingabeknoten verwendet, wie Eingangselemente vorhanden sind (z. B. 12). Die Anzahl der Neuronen für die erste und zweite verdeckte Schicht wird durch Optimierung des Lernverhaltens bestimmt. Die Ausgabeschicht besteht aus der selben Anzahl von Neuronen, wie Energieintervalle des Spektrums erwünscht sind (z. B. 11). Die Grenzen der Energieintervalle können mit Hilfe eines linearen χ²-Optimierungsverfahrens unter der Vorgabe ermittelt werden, die Abweichung der aus dem Originalspektrum ermittelten Dosis zu der aus dem genäherten Spektrum ermittelten Dosis zu minimieren. Anschließend werden die Gewichte (Verbindungsstarken) des Netzwerkes mittels der beiden Lernalgorithmen "Simulated Annealing" und "Backpropagation" trainiert. Die für das Training und den Test des Netzes erforderlichen nominellen Ausgangssignale können durch Messungen und durch Simulation der Sensoren ermittelt werden, wobei abhängig von der Art der verwendeten Spektren die Netztopologie deutlich variieren kann. Nach dem Training bleibt das Netzwerk unverändert und kann für die Berechnung unbekannter Spektren verwendet werden, ohne daß dazu eine große Rechenleistung notwendig ist.

2c Die Reskalierung fügt, mittels Multiplikation aller Ausgabekanäle (z. B. 11) mit dem bei der Skalierung gespeicherten Faktor, die absolute Dosis-Information wieder hinzu.

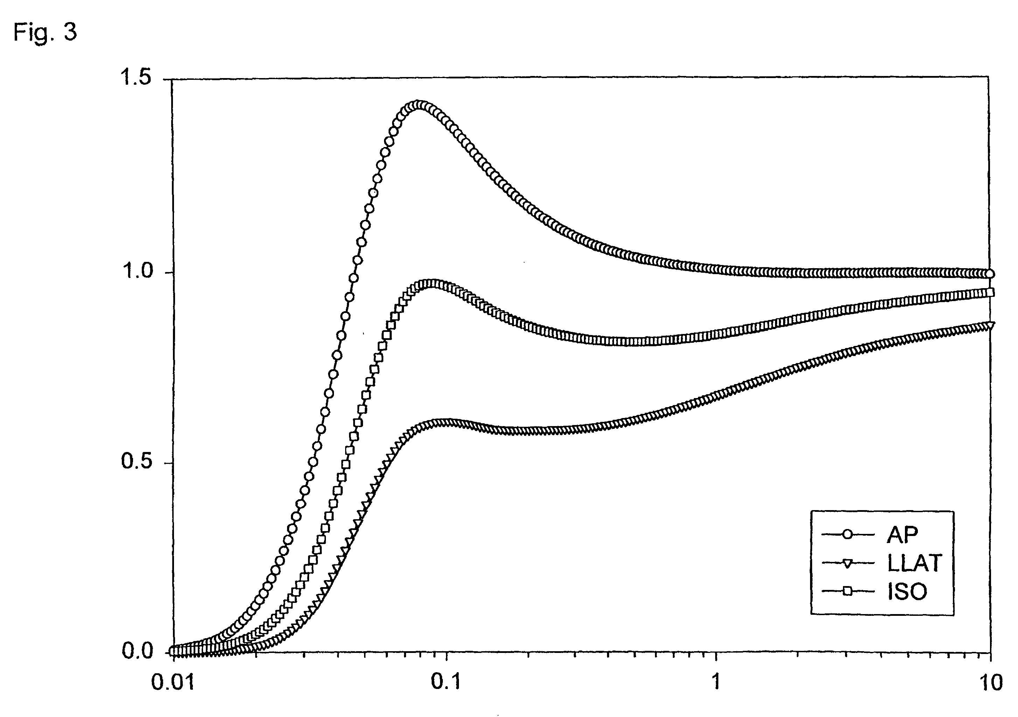

Als Ergebnis der Analyse der Eingangsdaten durch das künstliche neuronale Netz liegt die spektrale Information in dem Ausführungsbeispiel in Form von 11 Werten für die Photonenfluenz für die 11 Energieintervalle (Energiegruppen) vor. Diese kann dann zum einen direkt angezeigt werden (Fig.1, 3b) und kann sofortige Rückschlüsse über das Strahlungsfeld zulassen, zum anderen werden diese Daten in einem weiteren Verarbeitungsschritt weiterverarbeitet (Fig.1, 5).

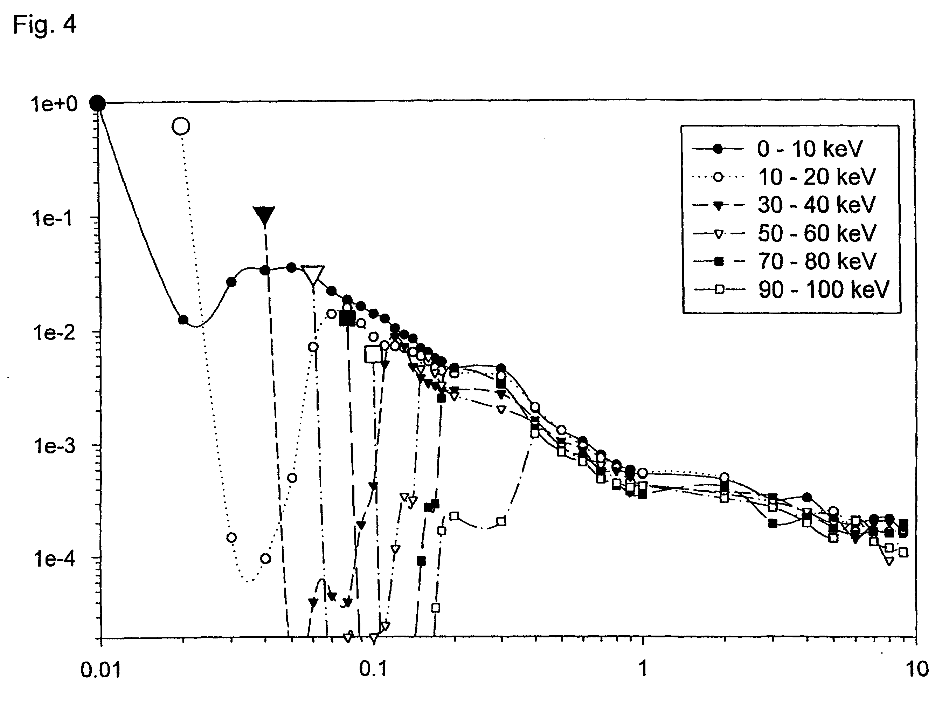

Die Organdosen - sowie die effektive Dosis, die sich als gewichtete Summe der Organdosen ergibt - variiert für Photonen unterschiedlicher Energie in dem Energiebereich von 10 keV bis 100 MeV. Um dieser Tatsache Rechnung zu tragen, werden Gewichtungsfunktionen (Dosis-Konversionsfaktor-Kurven) verwendet, die je nach gefragter Dosisgröße (H*(10), Hₚ(10), Hₓ, bestimmte Organdosen etc.), Geschlecht (Adam, Eva) und Einstrahlwinkel einen unterschiedlichen Verlauf aufweisen (Fig.3). Zum anderen sind die Dosis-Konversionsfaktoren, bedingt durch den sich ständig ändernden Stand der Erkenntnisse, einem steten Wandel unterworfen. In diesem System werden sie per Software implementiert (Fig.1, 4), was einen einfachen und kostengünstigen Austausch ermöglicht, ohne daß Änderungen an der Hardware notwendig wären.

An dieser Stelle wird der zuvor beschriebe Sachverhalt dadurch berücksichtigt, daß die vorhandene spektrale Information (Fig.1, 3) mit der gewünschten Dosis-Konversionsfaktor-Kurve (Fig.1, 4) gefaltet wird. Das Ergebnis ist ein Dosisspektrum (Fig.1 6).

In dem Dosisspektrum (Fig.1 6) ist für jeden der 11 Energiebereiche (Energiegruppen) der jeweilige Beitrag zur Gesamtdosis in Form eines (Teil-) Dosiswertes gegeben. Diese Information kann ebenfalls zur Anzeige gebracht werden und kann dadurch z.B. bei der Auswahl geeigneter Abschirmungsmaßnahmen hilfreich sein.

Durch eine abschließende Integration (Fig.1, 7) über das Dosisspektrum wird dann eine geeignete Dosismeßgröße (H*(10), Hₚ(10), Hₓ etc. bzw. bestimmte Organdosen) bestimmt und direkt angezeigt (Fig.1, 8).

Am Ende der Analysekette liegt ein Dosiswert (Fig.1, 8) vor, der wie bei bisherigen Dosimetern weiterverwendet werden kann. Wie bereits zuvor erwähnt, kann die zu ermittelnde Dosismeßgröße durch den Austausch der Dosis-Konversionsfaktoren an veränderte Bedürfnisse angepaßt werden. Andererseits erlauben mehrere im System gespeicherte Dosis-Konversionsfaktoren die unmittelbare Abfrage verschiedener Dosismeßgrößen.

Detektionsprinzip mit dem in Fig. 2 dargestellten Detektor. Der Nachweis der Photonen erfolgt über die Wechselwirkung der einfallenden Photonen mit der Materie des Detektors, wobei geladene Teilchen erzeugt werden, die über Energiedeponierungen in der aktiven Schicht des Detektors ein Signal erzeugen. Der Aufbau des Detektors kann durch fünf Schichten charakterisiert werden:

### Filterschicht 9:

Die Filterschicht wird nur beim Sensor für hochenergetische Photonenstrahlung vor der Diode angebracht. In ihr soll bevorzugt die Wechselwirkung der einfallenden Photonen stattfinden. Sie beeinflußt durch eine entsprechende Auswahl der Materialien und der Schichtdicken die Eigenschaften des Detektors. Wichtig in diesem Zusammenhang ist die Nachweiswahrscheinlichkeit der hochenergetischen Photonen als Funktion ihrer Einstrahlenergie. Schichtdicken: ab 1mm bis ca. 10 mm.

### Totschicht 10, 11:

Aufgrund der Empfindlichkeit von Dioden gegenüber Oberflächenverschmutzungen und Licht werden sie mit einer Passivierungsschicht (Fig. 2, 11) belegt, um die genannten Effekte zu reduzieren. Dies hat den Nebeneffekt, daß die geladene Teilchen, die vom Filter in den Detektor hinein wandern, in dieser Schicht abgebremst werden können. Um den Nachweis von niederenergetischen Teilchen möglichst effektiv zu gestalten, sollte die Dicke der Totschicht möglichst klein gehalten werden. In der Praxis liegen die dünnsten Totschichten bei 500 Angström. Die oft unvermeidbare Lücke zwischen Filter und Diode (Fig. 2, 10 und 14) wird hier der Totschicht zugerechnet.

### Aktive Schicht 12:

Sie dient zum Nachweis von geladenen Teilchen, die durch die Photonenwechselwirkung erzeugt wurden. Schichtdicke: Im allgemeinen wählt man hier aktive Schichten mittlerer bis hoher Dicke (300µm bis einige mm), um die Nachweiswahrscheinlichkeit für Photonen zu erhöhen.

### Passive Schicht 13 hinter der aktiven Schicht 12:

Diese bewirkt einerseits eine eventuelle Rückstreuung der geladenen Teilchen. Andererseits wirkt diese Schicht im Falle einer Bestrahlung von hinten als Totschicht, zusammen mit der Luftschicht (Fig. 2, 14) hinter der Diode.

### Filterschicht 15:

Da - besonders hochenergetische - Photonen ein hohes Durchdringungsvermögen haben, kann es sinnvoll erscheinen, die Rückseite der Diode mit einer weiteren Filterschicht zu belegen, welche als Konverter für die von hinten kommenden Photonen wirksam wird.

### Beschreibung zu Fig. 3:

Beispiele für Dosiskonversionsfunktionen. Abszisse: Energie in MeV, logarithmisch, Bereich: 0,01 MeV bis 10 MeV; Ordinate: Konversionsfaktor in Sv/Gy, linear, Bereich: 0 bis 1,5. Vergleich der Dosiskonversionsfunktionen für drei unterschiedliche Dosisgrößen, die zur Bestimmung der effektiven Dosis bei verschiedenen Bestrahlungsgeometrien verwendet werden. (Kreis: Aperior Posterior (AP), Dreieck: Lateral (LLAT), Quadrat: Isotrop (ISO)). Besonders in dem Bereich mit einer starker Änderung des Konversionsfaktors ist eine gute Reproduktion des Photonenspektrums durch das künstliche neuronale Netz wichtig.

### Beschreibung zu Fig. 4:

Beispiele für definierte Elemente des Sensors ohne Filter. Abszisse: Energie in MeV, logarithmisch, Bereich: 0,01 MeV bis 10 MeV; Ordinate: Nachweiswahrscheinlichkeit, logarithmisch, Bereich: 0.00002 bis 1. Gerechnet wurden 10 Elemente mit Einsatzschwellen für die Photonendetektion in 10 keV Schritten von 0 keV bis 100 keV. In der Abbildung ist der Übersichtlichkeit halber nur eine Auswahl von diesen Elementen dargestellt.

### Beschreibung zu Fig. 5:

Pulshöhenverteilungen bei verschiedenen Photonenenergien für einen Sensor mit Bleifilter. Abszisse: Energie in keV, linear, Bereich: 0 keV bis 2000 keV; Ordinate: Ereignisse pro Binbreite, linear, Bereich: 0 bis 80 keV⁻¹. Für Photonenenergien im Bereich von 3 MeV bis 100 MeV sind die Pulshöhenverteilungen dargestellt. Es bilden sich Peaks in dem Energiebereich um 350 keV und 700 keV aus, die den Energiedeponierungen durch ein Elektron bzw. durch ein Elektron-Positron-Paar entsprechen.

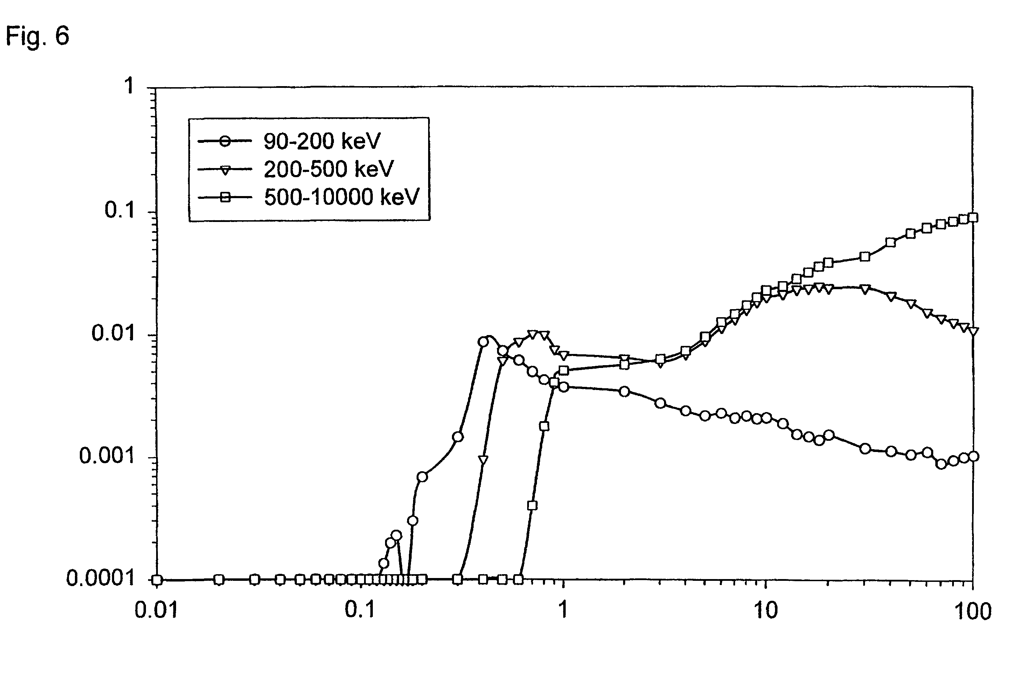

### Beschreibung zu Fig. 6:

Antwortfunktionen für 3 Elemente des Sensors mit Bleifilter. Abszisse: Energie in MeV, logarithmisch, Bereich: 0.01 MeV bis 100 MeV; Ordinate: Nachweiswahrscheinlichkeit, logarithmisch, Bereich: 10⁻⁴ bis 1. Es wurden 3 Elemente definiert, die in der Pulshöhenverteilung aus Fig. 5 den Bereichen der Energiedeponierung von 90-200 keV (Kreis), 200-500 keV für Peak 1 (Dreieck) und 500 keV - 104 keV für Peak 2 (Quadrat) entsprechen.

## Patentansprüche

1. Verfahren zur Ermittlung von Photonenspektren mit Hilfe von mindestens zwei hintereinander liegenden Halbleiterdetektoren, von denen mindestens einer mit einem Metallfilter abgedeckt ist,
**gekennzeichnet durch** folgende Verfahrensschritte:
a) Gewinnen von integralen Zählraten von vier sich nicht völlig überlappenden Energieintervallen für den nicht mit einem Metallfilter belegten Halbleiterdetektor im Bereich 20 keV bis 300 kev.
b) Gewinnen von integralen Zählraten von sich nicht völlig überlappenden Energieintervallen des mit einem Metallfilter bedeckten Halbleiterdetektors, wobei ein Metallfilter verwendet wird, das als Konverter für Photonen im Bereich von 200 keV bis 100 MeV dient,
c) Verwenden der integralen Zählraten der sich nicht völlig überlappenden Energieintervalle von Halbleiterdetektor 1 und 2 als Eingangsgrößen für ein künstliches neuronales Netz geeigneter Topologie, das für diese Aufgabenstellung trainiert wurde.
d) Zuordnung eines Photonenspektrums zu den Eingangswerten **durch** das künstliche neuronale Netz.

2. Verfahren nach Anspruch 1, **dadurch gekennzeichnet, daß** als Eingangsgrößen die integrierten Zählraten von mindestens 9 Energieintervallen des nicht gefilterten Halbleiterdetektors verwendet werden.

3. Verfahren nach Anspruch 1 oder 2, **dadurch gekennzeichnet, daß** als Eingangsgrößen auch die integrierten Zählraten von mindestens zwei Energieintervalle des gefilterten Halbleiterdetektors verwendet werden.

4. Verfahren nach Anspruch 1 bis 3, **dadurch gekennzeichnet, daß** als Halbleiterdetektoren Siliziumdioden verwendet werden.

5. Verfahren nach Anspruch 1 bis 3, **dadurch gekennzeichnet, daß** aus dem Photonenspektrum ein Dosisspektrum und/oder die Photonendosis bestimmt wird.

6. Vorrichtung zur Durchführung des Verfahrens gemäß einem der Ansprüche 1 bis 5, bestehend aus einem ungefilterten Halbleiterdetektor für den niederenergetischen und einem davor liegenden mit einem Metallfilter bedeckten Halbleiterdetektor, wobei der Metallfilter als Konverter für Photonen dient, für den hochenergetischen Energiebereich, dazugehörenden Verstärkern und einem künstlichen neuronalen Netz.

7. Verwendung der Vorrichtung nach Anspruch 6 für die Personendosimetrie oder die Ortsdosimetrie.

## Claims

1. Method of detecting photon spectra by means of at least two semiconductor detectors, which lie one behind the other, at least one of which is covered with a metal filter, **characterised by** the following method steps:
a) obtaining integral counting rates of four energy intervals, which do not fully overlap one another, for the semiconductor detector, which is not covered with a metal filter, in the range of 20 keV to 300 keV;
b) obtaining integral counting rates of energy intervals, which do not fully overlap one another, of the semiconductor detector which is covered with a metal filter, a metal filter being used which serves as a converter for photons in the range of 200 keV to 100 MeV;
c) using the integral counting rates of the energy intervals, which do not fully overlap one another, of semiconductor detectors 1 and 2 as the input parameters for an artificial neural network of suitable topology, which network was trained for this purpose; and
d) associating a photon spectrum with the input values through the artificial neuronal network.

2. Method according to claim 1, **characterised in that** the integrated counting rates of at least 9 energy intervals of the non-filtered semiconductor detector are used as the input parameters.

3. Method according to claim 1 or 2, **characterised in that** the integrated counting rates of at least two energy intervals of the filtered semiconductor detector are also used as the input parameters.

4. Method according to claims 1 to 3, **characterised in that** silicon diodes are used as the semiconductor detectors.

5. Method according to claims 1 to 3, **characterised in that** a dose spectrum and/or the photon dose are/is determined from the photon spectrum.

6. Apparatus for accomplishing the method according to one of claims 1 to 5, comprising an unfiltered semiconductor detector for the low-energetic energy range and a semiconductor detector for the high-energetic energy range, which latter detector lies upstream of the former detector and is covered with a metal filter, the metal filter serving as a converter for photons, amplifiers belonging thereto, and an artificial neuronal network.

7. Use of the apparatus according to claim 6 for the dosimetry of persons or the dosimetry of positions.

## Revendications

1. Procédé pour déterminer des spectres de photons à l'aide d'au moins deux détecteurs semi-conducteurs placés l'un derrière l'autre, et dont au moins l'un est couvert par un filtre métallique,
**caractérisé par**
les étapes suivantes :
a) récupération des taux de comptage intégraux de quatre intervalles d'énergie qui ne se chevauchent pas complètement pour le détecteur semi-conducteur non occupé par un filtre métallique, dans une plage comprise entre 20 keV et 300 keV,
b) obtention des taux de comptage intégraux pour des intervalles d'énergie qui ne se chevauchent pas complètement du détecteur semi-conducteur couvert par un filtre métallique, en utilisant un filtre métallique servant de convertisseur des photons dans une plage comprise entre 200 keV et 100 MeV,
c) utilisation des taux de comptage intégraux des intervalles d'énergie qui ne se chevauchent pas complètement des détecteurs semi-conducteurs (1) et (2) comme grandeurs d'entrée pour un réseau neuronal artificiel de topologie appropriée, entraîné pour ce problème,
d) association d'un spectre de photons aux valeurs d'entrée par le réseau neuronal artificiel.

2. Procédé selon la revendication 1,
**caractérisé en ce que**
comme grandeurs d'entrée on utilise les taux de comptage intégrés d'au moins neuf intervalles d'énergie du détecteur semi-conducteur non filtré.

3. Procédé selon l'une quelconque des revendications 1 ou 2,
**caractérisé en ce que**
comme grandeurs d'entrée on utilise également les taux de comptage intégrés d'au moins deux intervalles d'énergie du détecteur semi-conducteur filtré.

4. Procédé selon l'une quelconque des revendications 1 à 3,
**caractérisé en ce que**
comme détecteurs semi-conducteurs on utilise des diodes au silicium.

5. Procédé selon l'une quelconque des revendications 1 à 3,
**caractérisé en ce qu'**
on détermine un spectre de dosage/ou la dose de photons à partir du spectre de photons.

6. Dispositif pour la mise en oeuvre du procédé selon l'une quelconque des revendications 1 à 5, composé d'un détecteur semi-conducteur non filtré pour la plage de basse énergie et devant celui-ci d'un détecteur semi-conducteur couvert d'un filtre métallique pour la plage de forte énergie, le filtre métallique servant de convertisseur pour les photons, et composé des amplificateurs correspondants ainsi que d'un réseau neuronal artificiel.

7. Application du dispositif selon la revendication 6, pour la dosimétrie de personnes ou la dosimétrie de lieux.
